# EUROPÄISCHE PATENTANMELDUNG

(11) **EP 1 826 708 A1**
(43) Veröffentlichungstag der Anmeldung: **29.08.2007**
(21) Anmeldenummer: 06003837.9
(22) Anmeldetag: 24.02.2006
(51) Int. Cl.: G06K 19/06

(54) **Kartenförmiger Datenträger**

(71) Anmelder: MAURER ELECTRONICS GMBH, 80992 München (DE)
(72) Erfinder: Fast, Peter, 86923 Finning / Entraching (DE); Kramer, Thomas, 80805 München (DE); Richter, Werner, 80999 München (DE); Dukic, Dragan, 82256 Fürstenfeldbruck (DE)
(74) Vertreter: Wagner, Bernhard Peter

(57) **Zusammenfassung**

Die Erfindung betrifft einen kartenförmiger Datenträger mit einem Substrat (1), das einen Aufzeichnungsbereich für Information aufweist, und mit mindestens einer transparenten Deckschicht (2), die ein eine optische Linsenwir-kung aufweisendes Relief (3) trägt, das den Aufzeichnungsbereich zumindest teilweise überlappt, wobei das Substrat (1) im Aufzeichnungsbereich unter Anwendung eines Laserstrahls durch das Relief (3) der Deckschicht (2) hindurch mit durch das Relief (3) der Deckschicht hindurch erkennbaren, durch das Relief (3) charakteristisch modifizierten Informationen versehen ist. Das Relief, durch das hindurch im Aufzeichnungsbereich des Substrats unter Anwendung eines Laserstrahls Informationen als Echtheitsmerkmal aufgezeichnet werden, ist eine Mikrolinsenanordnung.

## Beschreibung

Die Erfindung betrifft einen kartenförmigen Datenträger mit einem Substrat und mit mindestens einer transparenten Deckschicht, die ein eine optische Linsenwirkung aufweisendes Relief trägt, wobei das Substrat in einem Aufzeichnungsbereich unter Anwendung eines Laserstrahls durch das Relief der Deckschicht hindurch mit durch das Relief der Deckschicht hindurch erkennbaren, durch das Relief charakteristisch modifizierten Informationen versehen ist, sowie ein Verfahren zu seiner Herstellung.

Aus der EP 0 216 947 B1 ist bereits ein derartiger Datenträger bekannt, der auf der Oberseite einer Deckfolie ein Relief trägt, das beispielsweise in Form von Zylinderlinsen vorliegt. Wird mit Hilfe eines Laserstrahls Information in das Substrat eingeschrieben, so wird der Laserstrahl durch das zylinderlinsenförmige Relief fokussiert, was im Bereich des Reliefs eine charakteristische Modifizierung und Veränderung der Schwärzung oder optischen Dichte der aufgezeichneten Information bedingt. Diese Modifizierung hat ferner zur Folge, das bei der Betrachtung des bekannten kartenförmigen Datenträgers sich jeweils unterschiedliche Bilderscheinungen ergeben, die von der gewählten Betrachtungsrichtung abhängen.

Ein ähnlicher kartenförmiger Datenträger ist aus der EP 0 219 012 A2 bekannt, bei dem in der Deckfolie ein Relief in Form eines Zylinderlinsenrasters vorgesehen ist.

Bei derartigen kartenförmigen Datenträgern kann eine erste und eine zweite Information im Bereich des Reliefs in einer ersten bzw. einer zweiten Laserstrahlrichtung aufgezeigt werden, so dass die erste Information im Wesentlichen nur unter dem Winkel sichtbar ist, unter dem sie aufgezeichnet wurde, während die zweite Information in entsprechender Weise auch nur unter ihrem Aufzeichnungswinkel zu erkennen ist.

Derartige Elemente, die auch als "Kippbild" bezeichnet werden, werden hauptsächlich als Echtheitskennzeichen eingesetzt, da sie relativ schwer nachzuahmen sind, insbesondere da das "Kippbild" fotografisch oder mit kopiertechnischen Mitteln praktisch nicht reproduzierbar ist. Obwohl derartige "Kippbilder" als Echtheitsmerkmale gut geeignet sind, besteht im Hinblick auf die ständig steigenden Anforderungen an die Fälschungssicherheit von Datenträgern, insbesondere von Datenträgern, die als Reisepässe, Ausweiskarten, Kreditkarten und dergleichen dienen, das Bedürfnis, weiter verbesserte Sicherheitsmerkmale für Datenträger bereitzustellen.

Davon ausgehend liegt der Erfindung die Aufgabe zugrunde, einen weiteren kartenförmigen Datenträger der eingangs genannten Art zu schaffen, der ein durch ein Relief in der Deckschicht hindurch aufgezeichnetes Sicherheitselement trägt, das gegenüber dem Stand der Technik eine erhöhte Fälschungssicherheit besitzt.

Diese Aufgabe wird durch den kartenförmigen Datenträger nach Anspruch 1 gelöst.

Erfindungsgemäß ist also vorgesehen, dass das Relief, durch das hindurch im Aufzeichnungsbereich des Substrats unter Anwendung eines Laserstrahls Informationen als Echtheitsmerkmal aufgezeichnet werden, eine Mikrolinsenanordnung ist.

Durch die Verwendung einer Mikrolinsenanordnung als Relief in der Deckschicht des kartenförmigen Datenträgers wird erreicht, dass das Echtheitsmerkmal so klein ausgebildet sein kann, dass es mit bloßem Auge praktisch nicht mehr erkennbar ist, dass aber die als Echtheitsmerkmal aufgezeichneten Informationen unter Zuhilfenahme entsprechender optischer Beobachtungsmittel sicher erkennbar sind.

Bei einer vorteilhaften Weiterbildung der Erfindung ist vorgesehen, dass die Mikrolinsenanordnung aus einer Vielzahl von zueinander parallelen zylindrischen Mikrolinsen bestehen, deren Breite kleiner oder gleich 30 µm ist. Die Verwendung von derart schmalen Mikrolinsen hat den Vorteil, dass das Sicherheitsmerkmal nicht nur mit bloßem Auge nicht ohne weiteres als solches erkennbar ist, sondern auch praktisch nicht ertastet werden kann.

Um die Aufzeichnungsrichtungen der Anteile der als Sicherheitsmerkmal aufzuzeichnenden Information nicht nur in einer Ebene auswählen zu können, ist bei einer anderen Weiterbildung der Erfindung vorgesehen, dass die Mikrolinsenanordnung aus einer Vielzahl von rotationssymmetrischen Mikrolinsen besteht, deren Durchmesser kleiner oder gleich 30 µm ist.

Zweckmäßiger Weise sind die Mikrolinsen in regelmäßigen Abständen nebeneinander angeordnet, wobei die Abstände zwischen ihnen kleiner als ihre Breite bzw. ihr Durchmesser ist.

Um das Sicherheitsmerkmal für die Erkennung mit bloßem Auge möglichst unauffällig zu gestalten, ist vorgesehen, dass das Relief eine Länge oder einen Durchmesser aufweist, der kleiner als 5 mm, vorzugsweise kleiner als 3 mm, insbesondere etwa 1,5 mm ist.

Zweckmäßiger Weise lässt sich der erfindungsgemäße Datenträger durch ein Verfahren herstellen, das die folgenden Schritte aufweist:
- Einbringen eines als Mikrolinsenanordnung ausgebildeten Reliefs mit optischer Linsenwirkung in die transparente Deckschicht in einem Bereich, der einen Aufzeichnungsbereich für Information zumindest teilweise überlappt,
- Einschreiben einer ersten Information durch das Relief der Deckschicht hindurch in den Aufzeichnungsbereich unter Anwendung eines Laserstrahls, der mit einer Normalen zum Datenträger einen ersten Einschreibwinkel einschließt, und
- Einschreiben zumindest einer zweiten Information durch das Relief der Deckschicht hindurch in den Aufzeichnungsbereich unter Anwendung eines Laserstrahls, der mit der Normalen zum Datenträger einen zweiten Einschreibwinkel einschließt, so dass die erste und die zweite Information durch das Relief der Deckschicht hindurch jeweils nur dann erkennbar ist, wenn der Betrachtungswinkel dem ersten beziehungsweise zweiten Einschreibwinkel entspricht.

Unabhängig von der Form der Mikrolinsen ist es gemäß einem ersten Ausführungsbeispiel der Erfindung vorgesehen, dass der erste und der zweite Einschreibwinkel des Laserstrahls in einer zum Datenträger senkrechten Ebene liegen.

Wird das Relief der Deckschicht aus rotationssymmetrischen Mikrolinsen gebildet, so ergibt sich die Möglichkeit, dass der erste und der zweite Einschreibwinkel des Laserstrahls in zwei verschiedenen zum Datenträger senkrechten Ebenen liegen, was die Fälschungssicherheit weiter erhöht.

Grundsätzlich ist es möglich, die erste und die zweite Information im Wesentlichen gleichmäßig in den vom Relief überlappten Aufzeichnungsbereich einzuschreiben, wobei die jeweiligen Bildpunkte der ersten und zweiten Information jeweils in einem gemeinsamen Bildpunktbereich so nebeneinander eingeschrieben sind, dass sie nur unter dem jeweiligen Beobachtungswinkel erkennbar sind. Bei einer vorteilhaften Weiterbildung der Erfindung ist jedoch vorgesehen, dass die erste und die zweite Information in unterschiedliche Abschnitte des von dem Relief überlappten Aufzeichnungsbereichs eingeschrieben werden, wobei insbesondere ein erster Teil der Gesamt-Information in einen ersten Abschnitt des von dem Relief überlappten Aufzeichnungsbereichs unter einem ersten Einschreibwinkel und ein zweiter Teil der selben Gesamt-Information in einen zweiten Abschnitt des von dem Relief überlappten Aufzeichnungsbereichs eingeschrieben wird, so dass die Gesamt-Information nur bei gleichzeitiger Betrachtung unter beiden Einschreibwinkeln erkennbar ist.

Um eine saubere und scharfe Aufzeichnung der Information zu erreichen, ist es zweckmäßig, wenn der Laserstrahl zum Einschreiben der ersten und zweiten Information einen Durchmesser aufweist, der kleiner als die Breite bzw. der Durchmesser, vorzugsweise kleiner als die halbe Breite bzw. der halbe Durchmessers der Mikrolinsen ist.

Die Erfindung wird im Folgenden beispielsweise anhand der Zeichnung näher erläutert. Es zeigen:
Figur 1 eine vergrößert dargestellte Teilschnittansicht einer Ausführungsform des erfindungsgemäßen kartenförmigen Datenträgers;
Figur 2 eine Schemazeichnung, zur Verdeutlichung des Effekts der Modifizierung der aufgezeichneten Information;
Figur 3 eine vergrößerte perspektivische Darstellung eines erfindungsgemä-ßen kartenförmigen Datenträgers zur Veranschaulichung eines Mikrolinsenrasters;
Figur 4 eine vergrößerte Draufsicht auf einen Abschnitt eines erfindungsgemäßen kartenförmigen Datenträgers zur Veranschaulichung eines Mikrolinsenrasters aus Zylinderlinsen;
Figur 5 eine vergrößerte schematische Draufsicht auf einen Abschnitt eines erfindungsgemäßen kartenförmigen Datenträgers zur Veranschaulichung eines Mikrolinsenrasters aus rotationssymmetrischen Mikrolinsen; und
Figur 6(a) bis 6(e) ein Beispiel aufzuzeichnender Sicherheitsinformationen sowie Beispiele für deren Aufteilung auf unterschiedliche Bereiche des vom Relief überlappten Aufzeichnungsbereichs.

In den verschiedenen Figuren der Zeichnung sind einander entsprechende Elemente mit gleichen Bezugszeichen versehen.

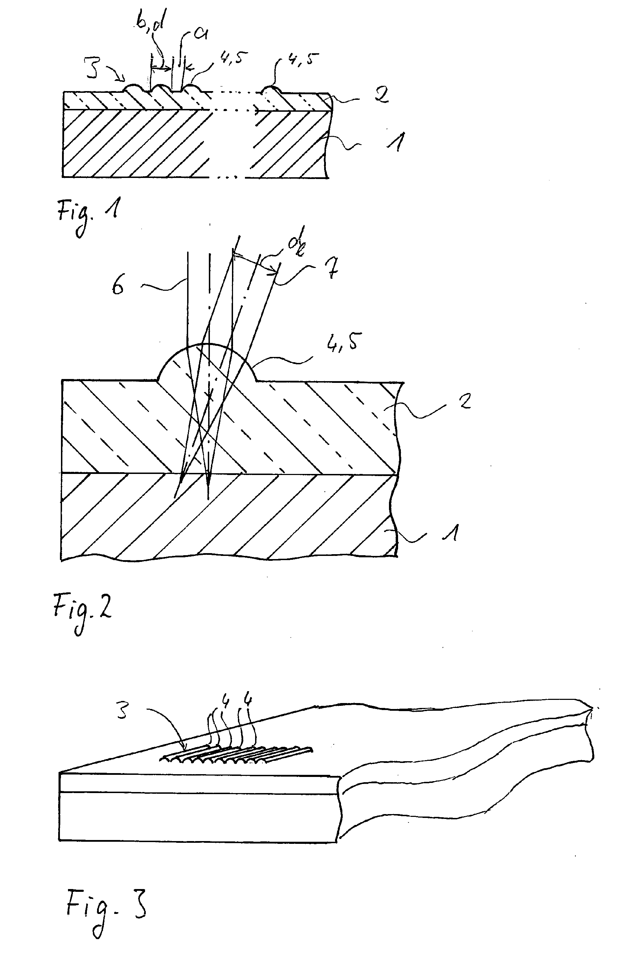

Wie in Figur 1 dargestellt ist, umfasst der erfindungsgemäße kartenförmige Datenträger ein Substrat 1 aus einem Material, dessen optische Eigenschaften, insbesondere dessen Reflexionsfähigkeit für Licht mit Hilfe eines Laserstrahls irreversibel veränderbar sind. Auf seiner Oberfläche trägt das Substrat 1 eine transparente Deckschicht 2, beispielsweise in Form einer aufkaschierten Klarsichtfolie aus Polyvinylchlorid, Polyester, Polycarbonat (PC), Polyethylen (PE) oder aus einem anderen geeigneten Material, das die verwendete Laserstrahlung nicht absorbiert. Anstelle einer Folie kann auch ein Lack oder eine Beschichtung aus den genannten Materialien auf dem Substrat 1 zur Ausbildung der Deckschicht aufgebracht werden.

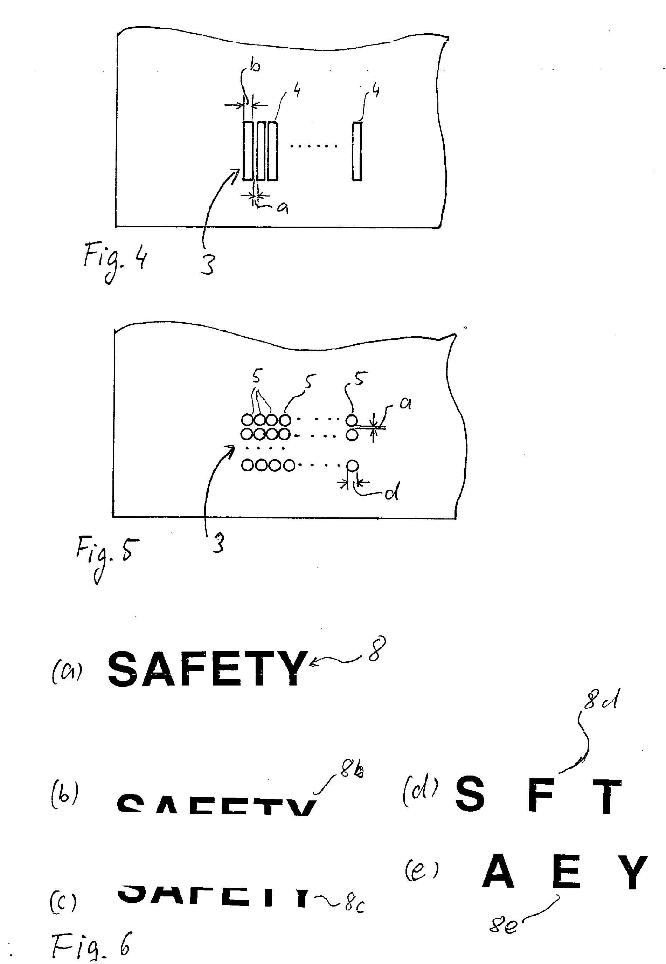

Auf der Oberseite der Deckschicht 2 ist ein Relief 3 aufgebracht, das aus rasterförmig nebeneinander angeordneten Mikrozylinderlinsen 4, wie in Figur 3 und 4 dargestellt, oder aus rotationssymmetrischen Mikrolinsen 5 gebildet ist, wie dies in Figur 5 veranschaulicht ist. Die Abstände a zwischen den einzelnen Mikrolinsen 4, 5 sind vorteilhafter Weise kleiner als deren Breite b bzw. deren Durchmesser d, insbesondere kleiner als die halbe Breite b bzw. der halbe Durchmesser d. Es ist auch möglich, dass die Abstände praktisch gleich 0 sind, so dass die Mikrolinsen unmittelbar dicht an dicht aneinander anschließen.

Die Breite b bzw. der Durchmesser d der Mikrolinsen ist zweckmäßiger Weise kleiner oder gleich 30 µm. Aufgrund derartig feiner Reliefstrukturen wird unter anderem erreicht, dass diese praktisch nicht als Relief oder Linsenanordnung erkennbar sind.

Um das Sicherheitsmerkmal des erfindungsgemäßen kartenförmigen Datenträgers auch optisch für das bloße Auge möglichst unauffällig zu gestalten, beträgt die Länge des Reliefs weniger als 5 mm, vorzugsweise weniger als 3 mm und insbesondere nur 1,5 mm. Für die Erkennung der im Bereich des Reliefs 3 eingebrachten Information sind somit geeignete optische Hilfsmittel erforderlich, wie weiter unten erläutert wird.

Wie in Figur 2 dargestellt ist, wird eine erste Information oder ein erster Teil einer Gesamt-Information mit Hilfe eines ersten Laserstrahls 6 in das Substrat eingeschrieben, während eine zweite Information oder ein zweiter Teil einer Gesamt-Information mit Hilfe eines zweiten Laserstrahls 7 eingeschrieben wird, der mit der Normalen der Oberfläche des Substrats 1 einen andern Winkel einschließt, als der erste Laserstrahl 6. Beispielsweise kann der erste Laserstrahl 6 senkrecht zur Oberfläche des Substrats 1 stehen, während der zweite Laserstrahl 7 dagegen geneigt ist. Es ist jedoch auch möglich, dass beide Laserstrahlen einen von 0° verschiedenen Winkel mit der Normalen zur Oberfläche des Substrats 1 einschließen. Selbstverständlich ist es auch möglich noch eine dritte oder vierte Information unter entsprechenden weiteren Winkeln einzuschreiben.

In Figur 2 ist besonders gut zu erkennen, dass der einer Mikrolinse 4, 5 zugeordnete Bildpunktbereich so genutzt wird oder genutzt werden kann, dass entsprechende Bildpunkte der ersten und zweiten Information nebeneinander im entsprechenden Bildpunktbereich vorliegen.

Die erste und die zweite Information bzw. der erste und zweite Teil einer Gesamt-Information können dann im Wesentlichen nur unter den entsprechenden Einschreibwinkeln beobachtet werden, so dass eine Änderung des Beobachtungswinkels auch eine Änderung der erkennbaren Information bewirkt, was den "Kippbild"-Effekt zur Folge hat.

Um hierbei eine saubere Trennung der Bildpunkte der ersten und der zweiten Information in den jeweiligen gemeinsamen Bildpunktbereichen sicherzustellen, ist es zweckmäßig, wenn der Durchmesser d₁ der Laserstrahlen 6, 7 kleiner oder gleich dem Durchmesser d bzw. der Breite b der Mikrolinsen, insbesondere kleiner oder gleich dem halben Durchmesser d bzw. der halben Breite b ist.

Da der Aufzeichnungsbereich, der von dem aus Mikrolinsen gebildeten Relief überdeckt wird möglichst unscheinbar und klein gehalten ist, ist es zur Erkennung des Sicherheitsmerkmals erforderlich, ein entsprechendes optisches Hilfsinstrument, insbesondere eine Lupe oder Lupenanordnung zu verwenden. Insbesondere ist es möglich, eine Art "Stereo"-Lupe mit einem ersten und einem zweiten Objektiv einzusetzen, wobei die optischen Achsen der Objektive so gegeneinander ausgerichtet sind, dass sie der ersten bzw. zweiten Einschreib- bzw. Beobachtungsrichtung entsprechen. Mit Hilfe einer derartigen "Stereo"-Lupe oder Lupenanordnung kann die erste und die zweite Information bzw. der erste und der zweite Teil einer Gesamt-Information gleichzeitig betrachtet werden. Im Falle der Aufzeichnung einer Gesamt-Information werden der erste und der zweite Teil, wie in Figur 6 dargestellt, in unterschiedlichen Abschnitten des Aufzeichnungsbereichs aufgezeichnet, so dass sich die beiden Teile der Gesamt-Information bei gleichzeitiger Beobachtung wieder zur Gesamt-Information wieder zusammenfügen.

Als Beispiel einer für das Sicherheitsmerkmal des erfindungsgemäßen kartenförmigen Datenträgers verwendeten Gesamt-Information ist in Figur 6(a) das Wort "Safety" dargestellt. Die Aufteilung dieser Gesamt-Information 8 kann beispielsweise so erfolgen, dass der obere Teil des als Gesamt-Information 8 dienenden Wortes "Safety" als erster Teil 8(b) der Gesamt-Information 8 dient, während der untere Teil 8(c) den zweiten Teil der Gesamt-Information darstellt.

Es ist jedoch auch möglich, die Gesamt-Information 8 buchstabenweise aufzuteilen, wie dies in Figur 6(d) und (e) angedeutet ist. Die Aufteilung einer Gesamt-Information kann jedoch auch in jeder beliebigen anderen Weise erfolgen.

Durch die Minimierung des Sicherheitsmerkmals wird dessen Fälschungssicherheit wesentlich verbessert, obwohl es sich mittels einer einfachen Lupenanordnung sicher erkennen lässt um die Echtheit des jeweiligen Datenträgers zu verifizieren.

## Patentansprüche

1. Kartenförmiger Datenträger
- mit einem Substrat (1), das einen Aufzeichnungsbereich für Information aufweist, und
- mit mindestens einer transparenten Deckschicht (2), die ein eine optische Linsenwirkung aufweisendes Relief (3) trägt, das den Aufzeichnungsbereich zumindest teilweise überlappt,
- wobei das Substrat (1) im Aufzeichnungsbereich unter Anwendung eines ) Laserstrahls durch das Relief (3) der Deckschicht (2) hindurch mit durch das Relief (3) der Deckschicht hindurch erkennbaren, durch das Relief (3) charakteristisch modifizierten Informationen versehen ist,
**dadurch gekennzeichnet, dass**
- das Relief (3) eine Mikrolinsenanordnung ist.

2. Kartenförmiger Datenträger nach Anspruch 1, **dadurch gekennzeichnet, dass** die Mikrolinsenanordnung aus einer Vielzahl von zueinander parallelen zylindrischen Mikrolinsen (4) besteht, deren Breite (b) kleiner oder gleich 30 µm ist.

3. Kartenförmiger Datenträger nach Anspruch 1, **dadurch gekennzeichnet, dass** die Mikrolinsenanordnung aus einer Vielzahl von rotationssymmetrischen Mikrolinsen (5) besteht, deren Durchmesser (d) kleiner oder gleich 30 µm ist.

4. Kartenförmiger Datenträger nach Ansprüchen 2 oder 3, **dadurch gekennzeichnet, dass** die Mikrolinsen in regelmäßigen Abständen (a) nebeneinander angeordnet sind.

5. Kartenförmiger Datenträger nach Anspruch 4, **dadurch gekennzeichnet, dass** die Abstände a zwischen den Mikrolinsen (4, 5) kleiner als deren Breite (b) bzw. deren Durchmesser (d) sind.

6. Datenträger nach einem der vorstehenden Ansprüche, **dadurch gekennzeichnet, dass** das Relief (3) eine Länge oder einen Durchmesser aufweist, der kleiner als 5 mm, vorzugsweise kleiner als 3 mm, insbesondere etwa 1,5 mm ist.

7. Verfahren zum Herstellen eines kartenförmiger Datenträgers mit einem Substrat (1) und mindestens einer transparenten Deckschicht (2) nach einem der vorstehenden Ansprüche, mit folgenden Schritten:
- Einbringen eines als Mikrolinsenanordnung ausgebildeten Reliefs (3) mit optischer Linsenwirkung in die transparente Deckschicht (2) in einem Bereich, der einen Aufzeichnungsbereich für Information zumindest teilweise überlappt,
- Einschreiben einer ersten Information durch das Relief (3) der Deckschicht (2) hindurch in den Aufzeichnungsbereich unter Anwendung eines Laserstrahls (6), der mit einer Normalen zum Datenträger einen ersten Einschreibwinkel einschließt, und
- Einschreiben zumindest einer zweiten Information durch das Relief (3) der Deckschicht (2) hindurch in den Aufzeichnungsbereich unter Anwendung eines Laserstrahls (7), der mit der Normalen zum Datenträger einen zweiten Einschreibwinkel einschließt, so dass die erste und die zweite Information durch das Relief (3) der Deckschicht hindurch jeweils nur dann erkennbar ist, wenn der Betrachtungswinkel dem ersten beziehungsweise zweiten Einschreibwinkel entspricht.

8. Verfahren nach Anspruch 7, **dadurch gekennzeichnet, dass** der erste und der zweite Einschreibwinkel des Laserstrahls (6, 7) in einer zum Datenträger senkrechten Ebene liegen.

9. Verfahren nach Anspruch 7, **dadurch gekennzeichnet, dass** das Relief (3) der Deckschicht (2) aus rotationssymmetrischen Mikrolinsen (5) gebildet wird und dass der erste und der zweite Einschreibwinkel des Laserstrahls (6, 7) in zwei verschiedenen zum Datenträger senkrechten Ebenen liegen.

10. Verfahren nach Anspruch 7, 8 oder 9, **dadurch gekennzeichnet, dass** die erste und die zweite Information in unterschiedliche Abschnitte des von dem Relief (3) überlappten Aufzeichnungsbereichs eingeschrieben werden.

11. Verfahren nach Anspruch 10, **dadurch gekennzeichnet, dass** ein erster Teil (8b; 8d) einer Gesamt-Information (8) in einen ersten Abschnitt des von dem Relief (3) überlappten Aufzeichnungsbereichs unter einem ersten Einschreibwinkel und ein zweiter Teil (8c; 8e) der Gesamt-Information (8) in einen zweiten Abschnitt des von dem Relief (3) überlappten Aufzeichnungsbereichs eingeschrieben wird, so dass die Gesamt-Information (8) nur bei gleichzeitiger Betrachtung unter den beiden Einschreibwinkeln erkennbar ist.

12. Verfahren nach einem der Ansprüche 7 bis 11, **dadurch gekennzeichnet, dass** der Laserstrahl (6, 7) zum Einschreiben der ersten und zweiten Information einen Durchmesser (d₁) aufweist, der kleiner als die Breite (b) bzw. der Durchmesser (d), vorzugsweise kleiner als die halbe Breite (b) bzw. der halbe Durchmesser (d) der Mikrolinsen (4, 5) ist.
